# EUROPEAN PATENT SPECIFICATION

(11) **EP 1 749 574 B1**
(45) Date of publication and mention of the grant of the patent: **29.04.2015**
(21) Application number: 05731682.0
(22) Date of filing: 28.03.2005
(51) Int. Cl.: C08F 4/651, C08F 4/02, C08F 10/02, B01J 37/00, B01J 31/38, B01J 31/36, C08F 4/654

(54) **METHOD FOR PREPARING A CATALYST AND PROCESS FOR POLYMERISING ETHYLENE AND COPOLYMERISING ETHYLENE WITH ALPHA-OLEFINS**
VERFAHREN ZUR HERSTELLUNG EINES KATALYSATORS UND VERFAHREN ZUR POLYMERISATION VON ETHYLEN UND COPOLYMERISATION VON ETHYLEN MIT ALPHA-OLEFINEN
PROCÉDÉ DE PRÉPARATION D'UN CATALYSEUR ET PROCÉDÉ DE POLYMÉRISATION D'ÉTHYLÈNE ET DE COPOLYMÉRISATION D'ÉTHYLÈNE AVEC DES ALPHA-OLÉFINES

(30) Priority: 08.04.2004 RU 2004110871; 08.04.2004 RU 2004110872
(43) Date of publication of application: 07.02.2007
(73) Proprietor: DSM IP Assets B.V., 6411 TE Heerlen (NL)
(72) Inventor: MIKENAS, Tatiana Borisovna, Novosibirsk, 630128 (RU); NIKITIN, Valentin Evgenyevich, Novosibirsk, 630128 (RU); ZAHAROV, Vladimir Aleksandrovich, Novosibirsk, 630090 (RU)
(74) Representative: Steffanie, Leonardus Gerardus
(86) International application number: PCT/RU2005/000138
(87) International publication number: WO 2005/097322

(56) References cited:
- EP-A1- 0 652 236
- WO-A1-01/44313
- WO-A1-92/00332
- RU-C1- 2 064 836
- RU-C1- 2 091 393
- SU-A3- 1 233 790
- US-A- 4 478 952

## Description

The invention relates to a method for preparing a catalyst and a process for polymerizing ethylene and copolymerizing ethylene with alpha-olefines, particularly to supported Ziegler-type catalysts comprising compounds of a transition metal on a magnesium-containing carried.

Various methods for preparing supported Ziegler-type catalysts are known. However only some of these methods provide for controlling the morphology of the carrier particles and correspondingly of the catalyst (the size, shape and density of particles, their size distribution). In the case of suspension or gas-phase polymerization the morphology of catalyst particles defines the morphology of the polymer particles forming on them. The important condition for the process of polymerization is obtaining the polymer powder of certain average particle size, narrow distribution of particle sizes and enhanced bulk density. For that catalysts having narrow particle size distribution, a predetermined average particle size and improved morphology are required. For different methods of the polymerization and different fields of polymer applications catalysts of different average particle size are required.

Catalysts having particle sizes of 5-25 µm are required for suspension polymerization of ethylene. Catalysts having particle sizes of 20-50 µm are required for gas-phase polymerization.

Catalysts having narrow distribution of particle sizes and magnesium chloride as a carrier can be produced by reaction of compound MgCl₂·3i-C₈H₁₇OH in a carbohydrate diluent with TiCl₄ in the presence of an electron-donor compound (ethylbenzoate, ethylanizate, etc.) [JP 59-53511, BO1J1/32, 1986)]. A catalyst produced according to this method has particle sizes of 5-15 µm, a rather high activity (up to 35 kg/g PE g Ti h atm C₂H₄) and provides for producing polyethylene powder with narrow grading and high bulk density.

The disadvantages of this method are a low temperatures (down to -20°C), use of big quantities of liquid TiCl₄ as a reaction medium, emission of a substantial amount of hydrochloride. Moreover, this method can not be used for producing catalysts with a particle size of more than 15 µm.

A method of producing a catalyst in the reaction of magnesium-aluminum-alkyl compound RMgR'·nAlR₃"·mD with chlorohydrocarbon and consequent reaction of the obtained solid product (carrier) with titanium or vanadium halogenide is known [DE 3626060, B01J31/32, 1987]. In the reaction (n-Bu)Mg(i-Bu) or (n-Bu)Mg(Oct) dissolved in hydrocarbons is used as a organomagnesium compound RMgR', and tret-BuCl is preferably used as a chlorohydrocarbon. The major disadvantage of catalysts prepared by this method is their low activity.

A method for producing an supported catalyst for polymerization of ethylene and copolymerization of ethylene with alpha-olefines comprising a transition metal compound (TiCl₄, VOCl₃, VCl₄) on a carrier of composition MgCl₂ ·mR₂O by applying the transition metal compound on a carrier is known [RU 2064836, B01J31/38, 10.08.96]. The carrier is produced in the reaction of the organomagnesium compound (OMC) having composition Mg(C₆H₅)₂nMgCl₂mR₂O, where n=0.37-0.7, m=2, R₂O - ether with R = i-Am, n-Bu, with carbon tetrachloride. A catalyst prepared according to this method provides for production of polymers with narrow controllable distribution of particles by their size and increased bulk density maintaining high activity in the processes of suspension and gas-phase polymerization of ethylene and copolymerization of ethylene with α-olefines.

The major disadvantage of this method is use of carbon tetrachloride as a chlorinating agent. The reaction of carbon tetrachloride with a organomagnesium compound is very intensive and accompanied by high emission of heat, and therefore it is difficult to be controlled, especially when a large amount of a catalyst being produced.

The present invention is based on the problem of providing a method for preparing a catalyst for polymerization of ethylene and copolymerization of ethylene with α-olefines permitting to produce polymers with narrow distribution of particles by their size and increased bulk density maintaining high activity in the processes of suspension and gas-phase polymerization of ethylene and copolymerization of ethylene with α-olefines without using carbon tetrachloride at the step of carrier synthesis.

The problem is solved by using chlorine-containing silicon compound of the following composition: XₖSiCl_{4-k,} where X=OR' or R' group with R' - alkyl C₁-C₄ or phenyl; k = 1-2, or phenyltrichloromethane C₆H₅CCl₃ is used as a chlorinating agent for organomagnesium compound (OMC) of composition Mg(C₆H₅)₂nMgCl₂mR₂O, where n=0.37-0.7, m=2, R₂O - ether with R = i-Am, n-Bu, for obtaining a magnesium-containing carrier for the catalyst.

The reaction of the organomagnesium compound with chlorine-containing compound XₖSiCl₄₋ₖ must be carried out at molar ratio XₖSiCl₄₋ₖ/Mg ≥1.0 and at a temperature in the range from 5 to 80°C.

The reaction of the organomagnesium compound with phenyltrichloromethane must be carried out at molar ratio C₆H₅CCl₃/Mg ≥1.0 and at a temperature in the range from 5 to 80°C.

The essential feature of the inventive method is use of chlorine-containing silicon compound XₖSiCl₄₋ₖ or phenyltrichloromethane C₆H₅CCl₃ as a chlorinating agent for the organomagnesium compound (OMC) of composition Mg(C₆H₅)₂·nMgCl₂·mR₂O.

A carrier produced in accordance with the method has a narrow distribution of particle sizes in the range of 5-50 µm. The required particle size of the carrier and correspondingly of the catalyst in this range is defined by conditions of the reaction process of organomagnesium compound (OMC) with chlorine-containing silicon compound or phenyltrichloromethane. The obtained magnesium-containing carrier preferably comprises, in wt%: 80-9 of magnesium chloride, 7-15 of ether, and 1-5 of complex hydrocarbon products. A catalyst is prepared by treatment of the carrier with titanium tetrachloride (TiCl₄) or vanadium chloride (VCl₄, VOCl₃) in a hydrocarbon solvent.

The method according to the invention provides for producing highly active catalysts with various average particle size and narrow distribution of particle sizes to be used for various purposes. According to the invention, for example, it is possible to produce catalysts with the particle sizes in the range from 5 to 40 µm to be used for suspension polymerization of ethylene.

The problem is also solved in the process of polymerization of ethylene and copolymerization of ethylene with α-olefines in the presence of the catalyst comprising a transition metal compound on a magnesium-containing carrier characterized in that the catalyst is prepared in accordance with the above method in a combination with a cocatalyst.

Polymerization of ethylene with this catalyst results in obtaining polyethylene of high bulk density of more than 0.3g/cm³ and a narrow particle size distribution. When titanium chloride is used in these catalysts as an active component, polyethylene of narrow molecular weight distribution is produced. When vanadium chloride is used, polyethylene has a broad molecular weight distribution. The obtained catalysts have an activity of 130-290 kg of polyethylene (PE)/g Ti h or 180-250 g PE/g V h.

The catalysts are used for polymerization of ethylene or copolymerization of ethylene with α-olefines in combination with a cocatalyst: aluminum trialkyl, preferably aluminum triisobutyl or aluminum triethyl. Polymerisation is carried out in suspension at a temperature of 50-100°C in the medium of hydrocarbon solvent, for example hexane, heptane, or in gas-phase mode without a hydrocarbon solvent at a temperature of 60-100°C and a pressure of 2-40 atm. Hydrogen in an amount of 5-50 vol% is used as a regulator of polymer molecular weight. In copolymerization of ethylene with α olefines: propylene; butene-1; hexene-1; 4-methyl-pentene-1 or other higher α-olefines are used.

The subject matter of the invention is illustrated by the following examples:
**Examples 1-13** describe the method with chlorine-containing compound XₖSiCl₄₋ₖ used as a chlorinating agent. The catalytic properties are shown in Table 1.

### Example 1.

### (A). Preparing organomagnesium compound solution

In a glass reactor having the volume 1,0 1 equipped with a stirrer and a thermostatic means the following components are fed: 29.2 g of powdered magnesium (1 mol) in 450 ml of chlorobenzene (4.4 mol), 203 ml of dibutyl ether (1.2 mol) and an activating agent comprising a solution of 0.05 g iodine in 3 ml of butyl chloride. The reaction is carried out in the atmosphere of an inert gas (nitrogen, argon) at a temperature from 80 to 100°C for 10 hours. After the reaction the mixture is settled, and the liquid phase is separated. The liquid phase is a solution of organomagnesium compound in chlorobenzene of the following composition:
MgPh₂·0.49MgCl₂·2(C₄H₉)₂O in concentration of 1.0 mol Mg/l.

### (B) Synthesis of a carrier

200 ml of the obtained solution (0.2 mol Mg) are charged in a reactor with a stirrer, and at the temperature of 8°C for 1 h a solution of 52 ml of phenyltrichlorosilane (PhSiCl₃) (0.32 mol of PhSiCl₃) in 35 ml of chlorobenzene (PhSiCl₃/Mg=1.6 (mol)) is measured in the reactor. Then the mixture is heated to 60°C for 30 min and kept at the temperature for 1 h. The mother solution is removed and the residue is washed in heptane 4 times by 250 ml at the temperature of 20°C. 33 g of powdered magnesium-containing carrier in the form of suspension in heptane are obtained.

### (C) Preparing a catalyst

22 ml of TiCl₄ (TiCl₄/Mg =1) are poured in the obtained suspension of magnesium-containing carrier in 150 ml of chlorobenzene, the reaction mixture is heated to 115°C and kept for 2 h with stirring, then the solid residue is settled and washed in heptane at a temperature of 60-70°C 5 times by 200 ml. The supported catalyst comprising 3.8 wt% of titanium is obtained. The average size of the catalyst particles is 5 µm.

Polymerization of ethylene is carried out in a steel reactor having the volume of 0.7 1 and equipped with a stirrer and a thermostatic jacket. Heptane (250 ml) and cocatalyst Al(i-Bu)₃ in concentration of 5 mmol/g are used as solvents for the polymerization.

Polymerization is carried out at the temperature of 7°C and pressure of 4 atm for 2 h. 0.0084 g of the catalyst is used in the example, and 82.3 g of the polymer is prepared. The catalyst activity is 4.9 kg/g of the catalyst hour, or 129 kg/g Ti h. The bulk density of the powdered PE is 0.34 g/cm³, and the average PE particle size according to screen test is 107 µm. The PE powder has narrow particle size distribution characterized by SPAN = (d₉₀-d₁₀)/d₅₀, where d₉₀, d₁₀ and d₅₀ are PE particle sizes corresponding to the integral content of the particles in the amount of 90, 50 and 10 wt% correspondingly. SPAN for this example is 0.8.

**Example 2.** Synthesis of the catalyst is carried out as in example 1 but vanadium oxytrichloride is used as the active catalyst component instead of a titanium compound.

1.9 ml of VOCl₃ are added to the obtained suspension of magnesium-containing carrier in 150 ml of heptane, the reaction mixture is heated to 50°C and kept for 2 h with stirring, then the solid residue is settled and washed in heptane at the temperature of 20°C 1 time (200 ml). The supported catalyst comprising 3.0 wt% of vanadium is obtained.

Polymerization of ethylene is carried out as in example 1.

**Example 3.** The catalyst is prepared as in example 1 except PhSiCl₃ is measured at 15°C. The catalyst comprises 3.1 wt% of titanium, and the average particle size is 7.4 µm.

Polymerization of ethylene is carried out as in example 1.

**Example 4.** The catalyst is synthesized as in example 1 except methyltrichlorosilane (**MeSiCl₃**) (MeSiCl₃/Mg=1.6) is used instead of PhSiCl₃ in the synthesis, and it is carried out at the temperature of 10°C. The catalyst comprises 2.9 wt% of titanium, and the average particle size is 4.5 µm.

Polymerization of ethylene is carried out as in example 1.

**Example 5.** The catalyst is synthesized as in example 4 except the carrier is synthesized at the temperature of 15°C and after ending the metering of methyltrichlorosilane (MeSiCl₃) the catalyst is obtained at the same temperature for 1 hour and contrary to example 4 not heated at 60°C. The catalyst comprises 4 wt% of titanium, and the average particle size is 7 µm.

Polymerization of ethylene is carried out as in example 1.

**Example 6.** The catalyst is synthesized as in example 5 except vanadium oxytrichloride (VOCl₃).is used instead of the titanium compound. The catalyst comprises 3.6 wt% of vanadium, and the average particle size is 8.4 µm.

Polymerization of ethylene is carried out as in example 1.

**Example 7.** The catalyst obtained as in example 6 is used for polymerization of ethylene in the presence of a hydrogen polymer chain carrier.

Polymerization of ethylene is carried out as in example 1 except ethylene pressure is 7.5 atm, hydrogen pressure is 0.5 atm, the polymerization temperature is 80°C, and the polymerization time is 1 h.

**Example 8.** The catalyst is prepared as in example 1 except the synthesis of the carrier is carried out at the temperature of 15°C and during 35 min. Solution of dimethyldichlorosilane (Me₂SiCl₂) in chlorobenzene (1:1 by volume) (Me₂SiCl₂/Mg = 2.9 (mol)) is measured into reactor. The reaction mixture is maintained at this temperature for 1 h, then it is heated up to 60°C for 30 min and maintained for 1 h. 22 ml of TiCl₄ (TiCl₄/Mg =1) are added to the obtained magnesium-containing carrier suspension in 150 ml of heptane, the reaction mixture is heated to 60°C and maintained with stirring for 2 h. Then the solid residue is settled and washed in heptane at a temperature from 60 to 70°C 5 times by 200 ml. The obtained supported catalyst comprises 2.4 wt% of titanium. The average particle size is 15.4 µm.

Polymerization is carried out at the temperature of 80°C and ethylene pressure of 4 atm, hydrogen at the pressure of 4 atm is used as a carrier of polymer chain; the polymerization time is 1 h.

**Example 9**. The catalyst is prepared as in example 1 except the metering of phenyltrichlorosilane PhSiCl₃ is carried out at 20°C for 30 min. The catalyst comprises 5 wt% of titanium, and the average particle size is 10.6 µm. Polymerization of ethylene is carried out as in example 8.

**Example 10**. The catalyst is prepared as in example 1 except the molar ratio PhSiCl₃/Mg = 1.9 and the metering of PhSiCl₃ solution (61 ml) in heptane solution (61 ml) is carried out at 35°C for 95 min. The catalyst comprises 3.9 wt% of titanium, and the average particle size is 24.4 µm. Polymerization of ethylene is carried out as in example 8.

**Example 11.** The catalyst is synthesized as in example 4 except the synthesis is carried out at the temperature of 50°C. The catalyst comprises 3.5 wt% of titanium, and the average particle size is 40.1 µm.

Polymerization of ethylene is carried out as in example 8 except the hydrogen pressure is 2 atm..

**Example 12.** The catalyst is synthesized as in example 1 except 123 ml of ethoxytrichlorosilane [(EtO)SiCl₃] in 200 ml of decane (EtOSiCl₃/Mg = 1.8); (EtO)SiCl₃ is prepared by reaction of SiCl₄ with Si(OEt)₄ in the ratio of 3:1. The catalyst comprises 3 wt% of titanium, and the average particle size is 9.1 µm.

Polymerization of ethylene is carried out as in example 11.

**Example 13.** The catalyst prepared as in example 9 is used in copolymerization of ethylene with hexene-1. Polymerisation is carried out at the ethylene pressure of 3 atm, the hexane concentration of 1-0.32 mol/l at 70°C for 30 min. A copolymer comprising 2 mol% of hexene-1 is produced in the amount of 7.1 kg/g cat (catalyst activity of 280 kg/g Ti h).

It is clear from the presented examples and Table 1 that use of chlorine-containing compound XₖSiCl₄₋ₖ for chlorination organomagnesium compound Mg(C₆H₅)₂·nMgCl₂·mR₂O for carrier synthesis provides for producing highly active catalysts for the polymerization of ethylene having narrow particle size distribution characterized by SPAN < 0.9 and a controllable average particle size in the range from 5 to 40 µm.

An important difference of the carrier synthesis using XₖSiCl₄₋ₖ from chlorination organomagnesium compound (OMC) with carbon tetrachloride is less intensive reaction of the OMC with chlorinating agents having low emission of heat and slower formation of carrier particles. It helps to control and adjust the catalyst synthesis.

**Examples 14-17** illustrate the method wherein phenyltrichloromethane C₆H₅CCl₃ is used. The catalytic properties are shown in Table 2.

### Example 14

### (A) Preparing an organomagnesium compound solution

In a glass reactor having the volume of 1,0 1 equipped with a stirrer and a thermostatic means 29.2 g of powdered magnesium in 450 ml of chlorobenzene (4.4 mol), 203 ml of dibutyl ether (1.2 mol) and the activating agent being a solution of 0.05 g of iodine in 3 ml of butyl chloride are charged. The reaction is carried out in the atmosphere of an inert gas (nitrogen, argon) at a temperature from 80 to 100°C for 10 h. After the reaction is over the reaction mixture is settled and the liquid phase is separated from the residue. The liquid phase comprises a solution of organomagnesium compound in chlorobenzene:
MgPh₂·0.49MgCl₂·2(C₄H₉)₂O of concentration 1.0 mol Mg/l

### (B) Synthesis of a carrier

200 ml of the obtained solution (0.2 mol Mg) are charged in a reactor with a stirrer, and at the temperature of 8°C for 35 minute a solution of 26 ml of phenyltrichloromethane C₆H₅CCl₃ (0.32 mol) in 30 ml of heptane (PhCCl₃/Mg=1.0 (mol)) is measured in the reactor. Then the mixture is heated to 60°C for 30 min and kept at the temperature for 1 h. The mother solution is removed and the residue is washed in heptane 4 times by 250 ml at the temperature of 20°C. 33 g of powdered magnesium-containing carrier in the form of suspension in heptane are obtained.

### (C). Preparing a catalyst.

22 ml of TiCl₄ (TiCl₄/Mg =1) are added to the obtained suspension of magnesium-containing carrier in 150 ml of heptane, the reaction mixture is heated to 60°C and kept for 2 h with stirring, then the solid residue is settled and washed in heptane at a temperature of 60-70°C 3 times by 200 ml. The supported catalyst comprising 1.4 wt% of titanium is obtained. The average size of the catalyst particles is 7.4 µm.

Polymerization of ethylene is carried out in a steel reactor having the volume of 0.7 1 and equipped with a stirrer and a thermostatic jacket. Heptane (250 ml) and cocatalyst Al(i-Bu)₃ in concentration of 5 mmol/g are used as solvents for the polymerization.

Polymerization is carried out at the temperature of 70°C and pressure of 4 atm for 2 h. 0.0083 g of the catalyst is used in the example, and 68 g of the polymer is prepared. The catalyst activity is 4.1 kg/g of the catalyst hour, or 293 kg/g Ti h. The bulk density of the powdered PE is 0.35 g/cm³, and the average PE particle size according to screen test is 150 µm. The PE powder has narrow particle size distribution characterized by SPAN =(d₉₀-d₁₀)/d₅₀, where d₉₀, d₁₀ and d₅₀ are PE particle sizes corresponding to the integral content of the particles in the amount of 90, 50 and 10 wt% correspondingly. SPAN for this example is 0.9.

**Example 15.** The catalyst prepared as in example 14 is used for ethylene polymerization as in example 14 but in the presence of hydrogen.

The polymerization is carried out at the temperature of 80°C, ethylene pressure of 4 atm; hydrogen at pressure of 2 atm is used as a carrier of a polymer chain; the time of polymerization is 1h.

**Example 16.** A catalyst is synthesized as in example 14 except the chlorinating agent being metered at 60°C. After metering the solution of C₆H₅CCl₃ the carrier is maintained at 60°C for 1 h and then washed with heptane 3 times by 200 ml. After that 204 ml of diethylaluminum chloride solution of the concentration of 1.6 mol/l and molar ratio AlEt2Cl/Mg = 1.2 within 20 minutes at room temperature is added to the carrier suspension in the reactor. Then the reaction mixture is maintained for 1 h at 45 °C, the carrier is washed 5 times by 200 ml of heptane.

A catalyst is obtained by treating the carrier suspension in heptane with vanadium tetrachloride in carbon tetrachloride (52 ml with vanadium content of 0.035 g/l) instead of titanium tetrachloride at the temperature of 50°C for 1 h. The catalyst is washed with 200 ml heptane 1 time. The catalyst comprises 3.2 wt% of vanadium, and the average size of the catalyst particles is 38 µm.

The polymerization of ethylene is carried out as in example 1 except the polymerization temperature is 90°C, ethylene pressure is 9.5 atm,. hydrogen pressure is 0.5 atm, and the time of polymerization is 1 h.

**Example 17.** The catalyst prepared as in example 14 is used in copolymerization of ethylene with hexene-1. Polymerization is carried out at the ethylene pressure of 3 atm, the hexene concentration of 1-0.19 mol/l at 70°C for 30 min. A copolymer comprising 1.2 mol% of hexene-1 is produced in the amount of 16 kg/g cat (catalyst activity of 580 kg/g Ti h).

It is clear from the presented examples and Table 2 that use of phenyltrichloromethane for chlorination organomagnesium compound Mg(C₆H₅)₂·nMgCl₂·mR₂O for carrier synthesis provides for producing highly active catalysts for the polymerization of ethylene having narrow particle size distribution characterized by SPAN < 0.9 and a controllable average particle size in the range from 7 to 40 µm.

An important difference of the carrier synthesis using C₆H₅CCl₃ from chlorination organomagnesium compound (OMC) with carbon tetrachloride is less intensive reaction of the OMC with chlorinating agents having low emission of heat and slower formation of carrier particles. It helps to control and adjust the catalyst synthesis.

**Table 1**

| Example No. | (C.A.)¹⁾ | (C.A.) Mg | T₁²⁾ °C | Content Ti(V) wt% | d aver³⁾ *µ*m | τ⁵⁾ h | P H₂ atm | T₂⁴⁾ °C | Yield, PE kg/g cat. | Activity PE kg gTi (V) h | IR(5) g/10min | IR (5) IR (2.16) | D₅₀ PE, µm | Bulk weight g/ml | SPAN |
|---|---|---|---|---|---|---|---|---|---|---|---|---|---|---|---|
| 1 | **PhSiCl₃** | 1.6 | 8 | 3.8 | 5.0 | 2 | 0 | 70 | 9.8 | 129 | - | - | 107 | 0.34 | 0.8 |
| 2 | **PhSiCl₃** | 1.6 | 8 | (3.0) | 5.0 | 2 | 0 | 70 | 7.2 | (120) | - | - | 100 | 0.34 | 0.8 |
| 3 | **PhSiCl₃** | 1.6 | 15 | 3.1 | 7.4 | 2 | 0 | 70 | 5.4 | 85.5 | - | - | 130 | 0.35 | 0.7 |
| 4 | **MeSiCl₃** | 1.6 | 10 | 2.9 | 4.5 | 2 | 0 | 70 | 5.8 | 100 | - | - | 80 | 0.32 | 0.7 |
| 5 | **MeSiCl₃** | 1.6 | 15 | 4.0 | 7.0 | 2 | 0 | 70 | 9.2 | 115 | - | - | 147 | 0.36 | 0.5 |
| 6 | **MeSiCl₃** | 1.6 | 15 | (3.6) | 8.4 | 2 | 0 | 70 | 13.1 | (182) | - | - | 200 | 0.4 | 0.5 |
| 7 | **MeSiCl₃** | 1.6 | 15 | (3.6) | 8.4 | 1 | 0.5 | 80 | 3.0 | (83)^{6}} | 0.5 | (21.5)⁷⁾ | 120 | 0.31 | 0.7 |
| 8 | **Me₂SiCl₂** | 2.9 | 15 | 2.4 | 15.4 | 1 | 4 | 80 | 1.9 | 79.0 | 3.0 | 3.2 | 191 | 0.34 | 0.6 |
| 9 | **PhSiCl₃** | 1.6 | 20 | 5.0 | 10.6 | 1 | 4 | 80 | 5.0 | 100 | 4.3 | 3.1 | 181 | 0.36 | 0.6 |
| 10 | **PhSiCl₃** | 1.9 | 35 | 3.9 | 24.4 | 1 | 4 | 80 | 2.7 | 69.2 | 6.0 | 3.1 | 339 | 0.34 | 0.6 |
| 11 | **MeSiCl₃** | 1.6 | 50 | 3.5 | 40.1 | 1 | 2 | 80 | 2.3 | 65.7 | 3.7 | 3.2 | 534 | 0.31 | 0.4 |
| 12 | **(OEt)SiCl₃** | 1.8 | 15 | 3.0 | 9.1 | 1 | 2 | 80 | 2.9 | 97.0 | 20.9 | 3.1 | 130 | 0.4 | 0.5 |

| | | | | | | | | | | | | | | | |
|---|---|---|---|---|---|---|---|---|---|---|---|---|---|---|---|
| 1) chlorinating agent 2) temperature of chlorination 3) average size of catalyst particles 4) temperature of polymerization 5) time of polymerization 6) ethylene pressure 7.5 atm 7) IR (21.6)/IR(5) | | | | | | | | | | | | | | | |

**Table 2**

| Example No. | T₁¹⁾ °C | Active component | Content Ti (V), wt% | d aver²⁾ *µ*m | τ³⁾ h | PC₂H₄ atm | P H₂ atm | T₂⁴⁾ °C | Yield, kg PE/ g cat. | Activity kg PE/ g Ti (V) h | IR(5), g/10 min | IR(5) IR (2.16) | D₅₀ PE, µm | Bulk weight g/ml | SPAN |
|---|---|---|---|---|---|---|---|---|---|---|---|---|---|---|---|
| 1 | 8 | TiCl₄ | 1.4 | 7.4 | 2 | 4 | 0 | 70 | 8.2 | 293 | - | - | 150 | 0.35 | 0.9 |
| 2 | 8 | TiCl₄ | 1.4 | 7.4 | 1 | 4 | 2 | 80 | 3.0 | 214 | 1.9 | 3.1 | 107 | 0.31 | 0.9 |
| 3 | 60 | VCl₄ | (3.2) | 38.0 | 1 | 9 | 0.5 | 90 | 8.1 | 253 | 0.24 | (21.2)⁵⁾ | 760 | 0.34 | 0.6 |

| | | | | | | | | | | | | | | | |
|---|---|---|---|---|---|---|---|---|---|---|---|---|---|---|---|
| 1) temperature of chlorination of organomagnesium compound with C₆H₅CCl₃ 2) average size of catalyst particles 3) time of polymerization 4) temperature of polymerization 5) IR (21.6/IR(5) | | | | | | | | | | | | | | | |

## Claims

1. A method for preparing a supported catalyst for polymerization ethylene and copolymerizing ethylene with alpha-olefines, said catalyst comprising a titanium or vanadium compound on a magnesium-containing carrier prepared by interreaction of a solution of an organomagnesium compound having composition Mg(C₆H₅)₂.nMgCl₂.mR₂O where n=0.37-0.7, m = 2, R₂O is an ether with R = i-Am, n-Bu with a chlorinating agent, **characterized in that** a chlorine-containing compound of composition XₖSiCl₄₋ₖ, where X=OR' or R' group with R' being C₁-C₄ alkyl or phenyl; k = 1-2, is used as a chlorinated agent or phenyltrichloromethane C₆H₅CCl₃ is used as a chlorinating agent, wherein the interreaction of the organomagnesium compound with the chlorine-containing compound is carried out at temperature in the range from 5 to 80°C and at a molar ratio of XₖSiCl₄₋ₖ /Mg ≥ 1.0 or at molar ratio of C₆H₅CCl₃/Mg ≥ 1.0.

2. A process for polymerizing ethylene and copolymerizing ethylene with alpha-olefines in the presence of a catalyst comprising a transition metal compound applied on a magnesium-containing carrier, **characterized in that** said catalyst used is the catalyst according to claim 1 in combination with a cocatalyst.

## Patentansprüche

1. Verfahren zur Herstellung eines geträgerten Katalysators zur Polymerisation von Ethylen und Copolymerisation von Ethylen mit alpha-Olefinen, wobei der Katalysator eine Titan- oder Vanadiumverbindung auf einem durch Umsetzung einer Lösung einer Organomagnesiumverbindung mit der Zusammensetzung Mg(C₆H₅)₂.nMgCl₂.mR₂O, wobei n = 0,37-0,7, m = 2, R₂O für einen Ether mit R = i-Am, n-Bu steht, mit einem Chlorierungsmittel hergestellten magnesiumhaltigen Träger umfasst, **dadurch gekennzeichnet, dass** eine chlorhaltige Verbindung der Zusammensetzung XₖSiCl₄₋ₖ, wobei X = OR'- oder R'-Gruppe, wobei R' für C₁-C₄-Alkyl oder Phenyl steht, k = 1-2, als Chlorierungsmittel verwendet wird oder Phenyltrichlormethan C₆H₅CCl₃ als Chlorierungsmittel verwendet wird, wobei die Umsetzung der Organomagnesiumverbindung mit der chlorhaltigen Verbindung bei einer Temperatur im Bereich von 5 bis 80°C und bei einem Molverhältnis von XₖSiCl₄₋ₖ/Mg ≥ 1, 0 bzw. bei einem Molverhältnis von C₆H₅CCl₃/Mg ≥ 1,0 durchgeführt wird.

2. Verfahren zur Polymerisation von Ethylen und Copolymerisation von Ethylen mit alpha-Olefinen in Gegenwart eines Katalysators, der eine auf einen magnesiumhaltigen Träger aufgebrachte Übergangsmetallverbindung umfasst, **dadurch gekennzeichnet, dass** es sich bei dem verwendeten Katalysator um den Katalysator nach Anspruch 1 in Kombination mit einem Cokatalysator handelt.

## Revendications

1. Procédé de préparation d'un catalyseur sur support pour la polymérisation d'éthylène et la copolymérisation d'éthylène avec des alpha-oléfines, ledit catalyseur comprenant un composé de titane ou de vanadium sur un support contenant du magnésium préparé par interréaction d'une solution d'un composé organomagnésien ayant la composition Mg(C₆H₅)₂.nMgCl₂.mR₂O où n = 0, 37-0, 7, m = 2, R₂O est un éther avec R = i-Am, n-Bu, avec un agent chlorant, **caractérisé en ce qu'**un composé contenant du chlore de composition XₖSiCl₄₋ₖ, où X = un groupe OR' ou R', R' étant un alkyle en C₁-C₄ ou un phényle, k = 1-2, est utilisé comme agent chlorant ou le phényltrichlorométhane C₆H₅CCl₃ est utilisé comme agent chlorant, dans lequel l'interréaction du composé organomagnésien avec le composé contenant du chlore est réalisée à une température dans la gamme de 5 à 80 °C et à un rapport molaire de XₖSiCl₄₋ₖ/Mg ≥ 1,0 ou à un rapport molaire de C₆H₅CCl₃/Mg ≥ 1,0.

2. Procédé de polymérisation d'éthylène et de copolymérisation d'éthylène avec des alpha-oléfines en présence d'un catalyseur comprenant un composé de métal de transition appliqué sur un support contenant du magnésium, **caractérisé en ce que** ledit catalyseur utilisé est le catalyseur selon la revendication 1 en combinaison avec un cocatalyseur.
